Europäisches Patentamt

European Patent Office

Office européen des brevets

(11) Numéro de publication: **0 235 584**
**A1**

## (12) DEMANDE DE BREVET EUROPEEN

(21) Numéro de dépôt: **87101308.2**

(22) Date de dépôt: **30.01.87**

(51) Int. Cl.4: **C09D 5/14** , **A01N 25/02**

(30) Priorité: **04.02.86 FR 8601516**

(43) Date de publication de la demande:
**09.09.87 Bulletin 87/37**

(84) Etats contractants désignés:
**AT BE CH DE ES GB GR IT LI LU NL SE**

(71) Demandeur: **Société Anonyme dite: ARTILIN**
**47450 COLAYRAC-SAINT-CIRQ**
**(Lot-et-Garonne)(FR)**

(72) Inventeur: **Pojurowski, Fred**
**F-47450 Colayrac-Saint-Cirq**
**(Lot-et-Garonne)(FR)**

(74) Mandataire: **Simonnot, Bernard et al**
**Cabinet Simonnot 49, Rue de Provence**
**F-75442 Paris Cédex 09(FR)**

(54) **Vernis et peinture pesticides-acaricides.**

(57) L'invention a trait au domaine des vernis et peintures pesticides et insecticides.

Le concentré pour vernis et peinture pesticides-acaricides agissant par contact, selon l'invention, du type comportant des composés organo-phosphorés, organo-chlorés ou des pyréthrinoïdes, compatibles avec une base-peinture, est essentiellement caractérisé par le fait qu'il est constitué par une solution saturée ou une suspension à 50 % en poids d'au moins un pesticide et d'un acaricide dans un solvant polaire, ledit concentré étant destiné à entrer à raison de 4 à 10 % en poids environ dans une base-peinture.

Application du concentré à la fabrication de vernis et peintures pesticides et acaricides agissant par contact.

EP 0 235 584 A1

La présente invention concerne de façon générale les vernis et peintures pesticides agissant par contact. Plus particulièrement, l'invention concerne des concentrés actifs pour la réalisation de tels vernis et peintures, ainsi que leur procédé de fabrication.

On a déjà décrit dans le brevet français N° 1 050 895 un procédé de fabrication de vernis et peintures insecticides agissant par contact, l'activité de ces produits étant due au concept selon lequel la pellicule formée après séchage conserve une porosité suffisante pour permettre au produit insecticide actif de migrer vers la surface sous l'effet de la tension superficielle de la base, due notamment à la polarité de l'un de ses constituants.

On a également décrit dans le brevet français N° 71 39 852 un procédé de fabrication d'un vernis insecticide par contact, plus spécifiquement destiné au traitement de papiers peints ou autres supports de revêtements muraux. Ce procédé consiste à dissoudre ou disperser au moins un produit insecticide approprié à raison de 1 à 12 % en poids dans un solvant organique polaire compatible avec ledit insecticide, à une température inférieure à 80°C, puis à incorporer la solution ou émulsion ainsi obtenue dans une base pour vernis, compatible avec le solvant polaire, à raison de 15 à 45 % en poids.

Il y a lieu de noter que l'activité insecticide par contact ainsi obtenue résulte de la présence de cristaux actifs affleurant ou faisant saillie par rapport à la surface polymérisée dans la maille de laquelle ils sont emprisonnés, après migration du produit actif et l'évaporation du solvant. De cette manière, le produit actif ne se volatilisant pas dans l'atmosphère, sa rémanence est très importante et se traduit par plusieurs années d'efficacité.

Or pendant une telle période, la Demanderesse a été surprise de constater que, outre son activité insecticide ou pesticide attendue et normale, une peinture insecticide telle que décrite ci-dessus pouvait présenter une activité sur certains acariens, ce qui a été révélé à la suite de nombreuses vérifications des cas où des utilisateurs atteints de certaines affections asthmatiques et vivant dans des locaux traités avec une telle peinture trouvaient un soulagement. On sait en effet que la majorité des asthmes est due à des acariens, contre lesquels les malades luttent à l'heure actuelle par des mesures passives de désensibilisation, ou plus actives par suppression des éléments d'ameublement susceptibles d'abriter des acariens, ou au moyen de pulvérisations de solutions acaricides, qui sont cependant à renouveler constamment du fait de leur volatilité et de la période d'incubation relative à la reproduction desdits acariens.

La Demanderesse a donc cherché à modifier son produit et son procédé de fabrication afin, d'une part, d'obtenir une maille plus serrée susceptible d'incorporer des cristaux d'un agent spécifiquement acaricide sous une répartition appropriée de manière à agir par contact et, d'autre part, de permettre de réaliser un additif sous forme de concentré pour une base convenable, ce qui améliore le coût et la facilité de fabrication ainsi que le souplesse d'utilisation.

Conformément à l'invention, un concentré pesticide-acaricide est constitué par une solution saturée ou une suspension à 50 % en poids d'au moins un pesticide et d'un acaricide dans un solvant polaire, ledit concentré étant destiné à entrer à raison de 4 à 10 % en poids environ dans une base-peinture.

Selon une caractéristique avantageuse, un second concentré est constitué par une solution d'un fongicide, dont le but sera précisé ci-après, destiné à entrer à raison de 0,5 à 1,5 % en poids environ dans la base-peinture.

D'autres caractéristiques et avantages de l'invention ressortiront mieux de la description qui va suivre, donnée à titre explicatif mais nullement limitatif.

Les pesticides applicables selon l'invention sont compris dans la classe générale des composés organo-phosphorés, des organo-chlorés ou des pyréthrinoïdes de synthèse photostables, et l'on peut citer par exemple la décaméthrine. Il y a lieu de noter que les pesticides doivent présenter les propriétés suivantes : absence de toxicité aiguë, faible tension de vapeur, bonne rémanence, insolubilité à l'eau et, bien entendu, compatibilité avec la base-peinture, celle-ci pouvant être du type vinylique, acrylique ou gras. Comme solvants polaires, on peut citer par exemple : butanol, toluène, xylène, acétate d'isobutyle, essence de térébenthine, etc.

Bien que, comme l'a constaté la Demanderesse au cours de ses recherches, les composés organo-chlorés aient en général une certaine activité acaricide, le lindane ou gamma-hexachlorocyclohexane semble le plus spécifiquement efficace et il entre dans la composition du concentré pesticide-acaricide, à raison de 5 à 10 % en poids.

Le second concentré mentionné plus haut présente essentiellement des propriétés fongicides. Dans le cadre de ses travaux pour l'obtention d'un produit acaricide par contact, la Demanderesse a en effet trouvé que les acariens générateurs des asthmes se développent préférentiellement au détriment de moisissures leur fournissant un milieu nutritif. Dans ces conditions, la Demanderesse a pensé à améliorer encore son produit en allant au-delà de la destruction de l'organisme vivant, par la destruction même de son milieu nutritif et de ce fait par la réduction de sa capacité de prolifération. Le fongicide, connu en soi, est constitué par un composé N-hétérocyclique. En tout état de cause, la présence du fongicide s'avère utile dans une peinture pesticide appliquée dans des locaux où risquent de se développer des moisissures, afin d'empêcher ces dernières de digérer partiellement les produits organiques de la couche et de dégrader ainsi le revêtement de peinture.

Le procédé de fabrication du concentré pesticide-acaricide est similaire à celui décrit dans le brevet français N° 71 39 852 précité pour le vernis insecticide. Conformément à l'invention, on réalise une solution saturée ou une émulsion à 50 % en poids de pesticide et d'acaricide dans le solvant polaire, à chaud mais à une température inférieure à 80°C, pour obtenir une dispersion homogène, et l'on ajoute s'il y a lieu un agent dispersant, par exemple celui vendu dans le commerce sous l'appellation de Calgon. Le concentré ainsi obtenu peut être conservé et transporté sans difficulté et servir ultérieurement en tant qu'additif à une peinture, dans les proportions indiquées plus haut. Ce concentré peut également être incorporé immédiatement dans la base de peinture pour la fabrication directe de cette dernière, dans les mêmes proportions. En ce qui concerne le concentré de fongicide, celui-ci peut être incorporé à la base dans les mêmes conditions, soit au moment de l'utilisation, soit directement pour l'obtention d'une peinture.

Compte tenu de la structure et des propriétés des agents pesticides, acaricides et fongicides entrant avec leur solvant dans la formulation des concentrés de peintures selon l'invention, on obtient pour plusieurs années une destruction permanente et continue des insectes et des acariens facteurs de l'asthme, lesdites peintures répondant en outre aux normes en vigueur en ce qui concerne notamment la comestibilité, l'action fongistatique et la toxicité aiguë.

Il est bien entendu que la présente invention n'a été décrite qu'à titre explicatif mais nullement limitatif et qu'on pourra y apporter toute modification utile, notamment dans le domaine des équivalences techniques, sans sortir de son cadre.

**Revendications**

1. Concentré pour vernis et peinture pesticides-acaricides agissant par contact, du type comportant des composés organo-phosphorés, organochlorés ou des pyréthrinoïdes, compatibles avec une base-peinture, caratérisé par le fait qu'il est constitué par une solution saturée ou une suspension à 50 % en poids d'au moins un pesticide et d'un acaricide dans un solvant polaire, ledit concentré étant destiné à entrer à raison de 4 à 10 % en poids environ dans une base-peinture.

2. Concentré selon la revendication 1, caractérisé par le fait que le pesticide est constitué notamment par un pyréthrinoïde de synthèse photostable tel que la décaméthrine et l'acaricide est constitué par du lindane.

3. Concentré selon la revendication 2, caractérisé par le fait qu'il renferme de 5 à 10 % en poids d'acaricide.

4. Concentré selon l'une quelconque des revendications 1 à 3, caractérisé par le fait qu'il renferme en outre un agent dispersant.

5. Vernis et peinture pesticides-acaricides, caractérisés par le fait qu'ils renferment de 4 à 10 % en poids environ d'un concentré selon l'une quelconque des revendications 1 à 4, dans une base du type vinylique, acrylique ou gras.

6. Vernis et peinture selon la revendication 5, caractérisés par le fait qu'ils renferment en outre un concentré d'un fongicide constitué par un composé N-hétérocyclique, à raison de 0,5 à 1,5 % en poids environ dans la base-peinture.

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl.4) |
|---|---|---|---|
| A | DE-A-2 254 241 (SOGEREF)<br><br>* Revendications * & FR-A-71 39 852 (Cat. D)<br><br>--- | | C 09 D 5/14<br>A 01 N 25/02 |
| A | FR-A-2 547 483 (F.I.B.A.)<br><br>* Abrégé *<br><br>--- | | |
| A | FR-A-1 168 050 (NATIONAL RESEARCH DEVELOPMENT CORP.)<br>* Résumé, point 1; page 2, colonne de droite, lignes 22-25 *<br><br>----- | | |

**DOMAINES TECHNIQUES RECHERCHES (Int. Cl.4)**

C 09 D
A 01 N

Le present rapport de recherche a été établi pour toutes les revendications

| Lieu de la recherche | Date d'achèvement de la recherche | Examinateur |
|---|---|---|
| LA HAYE | 27-05-1987 | GIRARD Y.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons
& : membre de la même famille, document correspondant

OEB Form 1503 03 82